# EUROPEAN PATENT APPLICATION

(11) **EP 2 656 891 A1**
(43) Date of publication of application: **30.10.2013**
(21) Application number: 12165621.9
(22) Date of filing: 26.04.2012
(51) Int. Cl.: B01D 11/04, B04B 5/06

(54) **A counter current contactor**

(71) Applicant: Alfa Laval Corporate AB, 221 00 Lund (SE)
(72) Inventor: Höglund, Kasper, 144 63 RÖNNINGE (SE)

(57) **Abstract**

The present invention relates to a contactor for counter current flow of fluids comprising at least two bodies, i.e. a first body and a second body, both bodies are mounted on an axis, the second body is concentrically arranged on the axis inside a space within the first body. The contactor has one or more mixing zones (3), (3a), and (3b) in the space between the first body and the second body. The present invention relates also to a method for contacting fluids by the aid of the contactor.

## Description

The present invention relates to a contactor for counter current flow and a method for contacting fluids with the contactor.

### Background

Extractions of substances from one fluid to another immiscible fluid are usually done by creating a counter current flow of the two fluids driven by gravity. Performance is governed by the size of the interfacial area between the two fluids and the difference in concentrations between the substances.

Spinning discs are using technique utilizing the centrifugal force. Utilizing the centrifugal force necessitates very careful design and demand on parts and materials of the spinning disc. Therefore, one problem to be solved by the present invention is how to design spinning disc, which fulfill criteria such as mixing immiscible fluids, production of high extraction yields, separation of products etc. Another problem is how to create a large interfacial surface. Yet another problem is how to create a long enough counter current flow path. Yet another problem is how to achieve multifunction to a spinning disc. Yet another problem is how to be cost effective, i.e. to integrate the process in one machine.

### The Invention

Accordingly, the present invention solves the above mentioned problems by a contactor for contacting counter current flows of immiscible fluids in one or more passes. Thus, the present invention relates to a contactor for counter current flow of fluids. The contactor comprises at least two bodies, i.e. first body and second body, both bodies are mounted on an axis. The second body is concentrically arranged on the axis inside a space within the first body. One or more communicating disc shaped volumes could be created between the first and second body. An inlet for heavy phase fluids is connected to a channel close to the axis or at one end of the axis. The channel is for guiding the heavy phase fluids to one or more mixing zones in a space formed between the first body and the second body. An inlet for light phase fluids is connected opposite the inlet for heavy phase fluids on said axis. Thus, the inlet for heavy phase fluids and the inlet for light phase fluids are on opposite ends of the axis or close to opposite ends of the axis. A channel is connected to the inlet for light phase fluids on or close to the axis and the channel is for guiding the light phase fluids through the second body to the one or more mixing zones. In the mixing zones heavy phase fluids and light phase fluids are mixed or contacted. The mix of heavy phase fluids and light phase fluids are separated by centrifugal force into two fractions one light phase fraction and one heavy phase fraction. The light phase fraction is guided out through a channel within the axis or close to the axis and lead out through an outlet for light phase fractions at one end of the axis close to the inlet for heavy phase fluids. At the opposite end of the axis is a channel guiding heavy phase fractions to an outlet for heavy phase fraction close to the inlet for light phase fluids. A paring tube connected to an outlet for heavy phase fraction could be guiding the heavy phase fraction from a channel or a space within the first body. The first body is rotating and the second body is co-rotating, counter rotating or not rotating in relation to the first body.

A big interfacial surface area may be created by the shear forces between the two bodies, for example two rotating disc formed bodies, with different speeds, introducing the light phase from the rim and the heavy phase from the centre, gravity from the rotational speed will drive a counter current flow.

The light phase is collected at the centre, and the heavy phase at the rim, after the pass. The second body could be at least one pump impeller and could be used on the fastest rotating shaft to throw the light phase to the rim, and at least one weir could lead the heavy phase in to the centre, of a next set of discs. The second body is mounted inside a space within the first body as mentioned above. The second body could be a pump impeller between two weirs mounted inside the space within the first body, or the second body could be a pump impeller without any weirs mounted in the space within the first body. The two rotating bodies have different diameters and communicating cambers are formed between the bodies for fluids to pass in-between the bodies.

Inlet of a first fluid and an outlet for a second fluid at first end of the rotating system may be letting the fluids pass through transmission and/or bearings. Inlet of a second fluid and an outlet of first fluid at opposite end of the rotating system letting the fluids pass through transmission and/or bearings. One or more transmission gears could be connected to the axis of the first body and second body. If there is only one transmission gear, then the transmission gear is connected to the axis of the first body and the first body is rotating and the second body not rotating in relation to the first body. If there is two transmission gears the gears could be connected to the axis of the first body and second body. The first body and the second body could be co-rotating or counter rotating, and the bodies could be rotating with different speed. If there is more than two transmission gears the gears could be connected to additional rotating bodies.

The contactor may have one or more consecutive sets of pump impellers and weirs. One or more weirs could be guiding the fluids to the mixing zones. The contactor may have at least one mixing zone which is created where counter flow of fluids meet.

In each step the pump impeller shifts the light phase towards the rim and the weir guides the heavy phase towards the centre of the rotating fluid chambers. For a contactor where the first body has a lower rotating speed than the second body an impeller and weirs could be used to shift the light phase fraction to the rim and the heavy phase fraction to the center between each process step of contacting in the mixing zones.

For a contactor where the first body has a higher rotating speed than the second body a paring disc and weirs could be used to shift the light phase fraction to the rim and the heavy phase fraction to the center between each process step of contacting in the mixing zones. Thus, the second body may comprise one or more paring discs and at least one pump impeller, and the paring disc may be mounted on the slower rotating shaft.

The contactor could have openings for venting/draing and detecting leaks. The contactor may have one or more drains or ventings for securing the bearings from leakage of fluids, and the bearings could be arranged close to one or more seals. The first body of the contactor may have cut in portions for limiting the weight of the first body.

The present invention relates also to a method for contacting fluids comprising contacting the fluids within a counter current flow contactor according to the invention. The two or more immiscible fluids are pumped into the contactor for mixing by centrifugal force and then the mixed fluids are separated by centrifugal force into at least two fractions of fluids. The fluids are guided to one or more mixing zones in a space between first body and second body. In the mixing zones the fluids are mixed and contact for transferring of materials or substances, a light phase fraction is separated from the heavy phase fraction by centrifugal force after mixing zones. The light phase fraction is guided out of the contactor through an outlet close to the heavy phase fluids inlet. The heavy phase fraction is guided out through an outlet or through a paring tube and out via an outlet close to the inlet for light phase fluids inlet.

The contacting and the separation may be carried out by the two bodies, the bodies are rotating with equal or different speed caused by one or more transmission gears. The contacting of the fluids within the counter flow contactor is extraction.

The bodies are arranged at a different radius from the center line of the axis and the first body is arrange on an axis which is outside the axis of the second body and the axis of the first body is surrounding the axis of the second body. The light phase fluids and the heavy phase fluids create one or more communicating disc shaped volumes of fluids between the first body and the second body in the mixing zones. The fluids are mixed and contact for transferring of materials or substances, a light phase fraction is separated from the heavy phase fraction by centrifugal force and transferred to the centre and the heavy phase fraction is separated and transferred to the rim of the space.

In the following will the invention be explained by the use of Figures 1 to 3. The figures are for the purpose of demonstrating the invention and are not intended to limit its scope.

### Brief description of the drawings

- Figure 1: shows a principal drawing of the counter flow contactor of the invention.
- Figure 2: shows another embodiment of the counter flow contactor.
- Figure 3: shows examples of placements of drains.

### Detailed description of the drawings and the invention

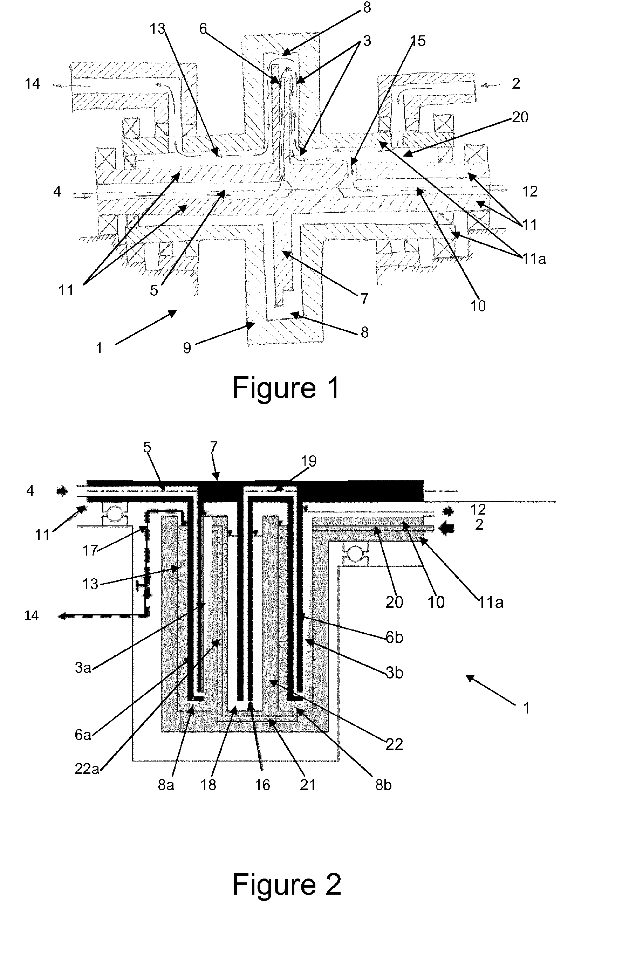

Figure 1 shows a principal drawing of counter flow contactor 1 of the invention. In this figure heavy phase fluids is introduced via inlet 2 into counter flow contactor 1. The heavy phase fluids are meeting light phase fluids in a mixing zone 3 or a contacting zone 3 where heavy phase fluids and light phase fluids are mixed and thus the fluids are contacting each other that for instance extraction can be obtained. Other types of contacts than extraction between fluids are also possible in the mixing zone.

The light phase fluids are introduced through an inlet 4 into channel 5 and pumped by centrifugal force through pump impeller 6 of second body 7, out to the rim of space 8 of first body 9. From the rim of space 8 the light phase fluids are meeting incoming heavy phase fluids in mixing zone 3. In mixing zone 3 the heavy phase fluids and the light phase fluids are mixed and the fluids are contacting each other and substances etc. are transferred over the phase boundary. The phase mixture from mixing zone 3 is separated into a light phase fraction and a heavy phase fraction. The fractions are obtained by separation by centrifugal force. The light phase fraction flows by the centrifugal force to the center of second body 7 where the light phase fraction is lead out through channel 10 of second body's axis 11 via outlet 12. It is also possible that light phase fraction could be lead out through channel 10, channel 10 is formed within the space between second body's axis 11 and axis 11 a of the first body, and the light phase fraction is lead out via outlet 12. Axis 11 a of first body is outside axis 11 of the second body. The heavy phase fraction is separated from the mixture of mixing zone 3 at the rim of space 8 and pumped out of first body 9 through channel 13 and out via outlet 14. According to one alternative may light phase fraction pass hole 15 to access channel 10.

Figure 2 shows another embodiment of counter flow contactor 1. According to this embodiment the pump impeller of second body is replaced by paring disc 16 and two pump impellers 6a and 6b. Outlet 14 can be a paring tube 17. The light phase fluids are introduced through inlet 4 into channel 5 in axis 11 and pumped through first pump impeller 6a to the rim of space 8a where the light phase fluids meet heavy phase fluids in first mixing zone 3a where contact between fluids take place. The light phase fraction from mixing zone 3a is transferred to compartment 18 where paring disc 16 pumps the light phase fraction from mixing zone 3a through channel 19. The light phase fraction is then guided via impeller 6b into mixing zone 3b where light phase fraction meets incoming heavy phase fluids. The heavy phase fluids are introduced via inlet 2 into channel 20 and transferred by centrifugal force to mixing zone 3b. By centrifugal force is light phase fraction from mixing zone 3b transferred in a channel 10 between the axis of first body and the axis of second body. The axis of first body is concentrically arranged at the axis of second body, i.e. axis 11 a of first body is outside axis 11 of the second body. The heavy phase fraction from mixing zone 3b is transferred via channel 21 to mixing zone 3a, and from mixing zone 3a the heavy phase fraction is lead out by paring tube 17 through outlet 14. Weirs 22 and 22a or baffles 22 and 22a are guiding the heavy phases and the light phases. Weir 22a is transferring heavy phase fraction from mixing zone 3b to mixing zone 3a via channel 21.

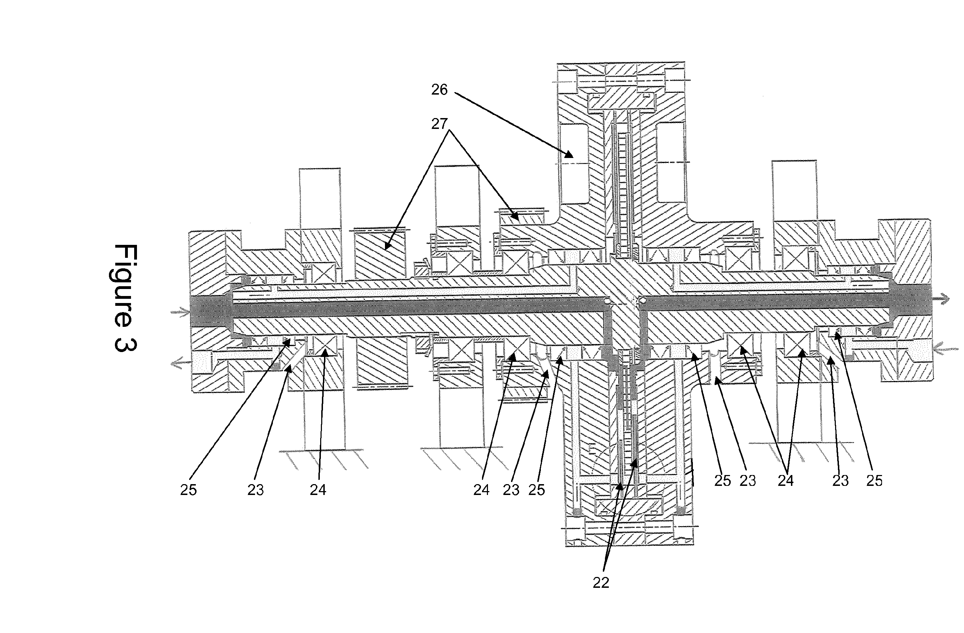

Figure 3 shows examples of placements of one or more drains 23. Drains 23 are securing bearings 24 from leaking fluids, drains 23 are arranged close to one or more seals 25.

Cut out portions 26 are place on first body for limiting the weight of the first body and thus limiting the force on the first body when the body is in action. One or more transmission gears 27 are connected to the axis of the rotating bodies making the rotating bodies to rotate with different speed or by the same speed. It is also possible to cause the two bodies to co-rotate or to counter rotate. One alternative could be that second body 7 is not rotating, i.e. static, and the first body is rotating around the second body. When the second body is not rotating there is only need for one transmission gear 27.

For multistep systems weirs 22 and 22a are used to collect light phase fraction and heavy phase fraction in separate volumes after each mixing zone passage. After each passage the heavy phase fraction and the light phase fraction must shift places to reload for new contacting in the next mixing zone.

The first and second rotating bodies may be co-rotating or counter rotating, but it is also possible that the second body may not be rotating and the first body may be rotating. The bodies thus may have different speed in relation to each other.

For a system where the first body has a lower rotating speed than the second body an impeller and weirs 22 are used to shift the light phase fraction to the rim, i.e. space 8, 8a and 8b, and the heavy phase fraction to the center between each process step of contacting in the mixing zones.

For a system where the first body has a higher rotating speed then the second body a paring disc and weirs 22 are used to shift the light phase fraction to the rim and the heavy phase fraction to the center between each process step of contacting in the mixing zones.

## Claims

1. A contactor for counter current flow of fluids comprising at least two bodies, i.e. a first body and a second body, both bodies are mounted on an axis, the second body is concentrically arranged on the axis inside a space within the first body, wherein inlet (2) for heavy phase fluids is connected to channel (20) at one end of the axis for guiding the heavy phase fluids to one or more mixing zones (3), (3a), and (3b) in the space between the first body and the second body, wherein inlet (4) for light phase fluids on the opposite end of the axis is connected to channel (5) for guiding the light phase fluids through the second body to one or more mixing zones (3), (3a) and (3b), wherein channel (10) is connected to outlet (12) for light phase fraction at one end of the axis close to inlet (2) for heavy phase fluids, at the opposite end of the axis is channel (13) connected to outlet (14) for heavy phase fraction close to inlet (4) for light phase fluids, or a paring tube (17) is connected to channel (13) for outlet of heavy phase fraction, wherein the first body is rotating and the second body is co-rotating, counter rotating or not rotating in relation to the first body.

2. A contactor according to claim 1, wherein the second body is at least one pump impeller (6) inside the space within the first body.

3. A contactor according to claim 2, wherein the second body is a pump impeller (6) between two weirs (22) mounted inside a space within the first body, or the second body is a pump impeller (6) without any weirs (22) mounted in the space within the first body.

4. A contactor according to claim 1, wherein the second body comprises one or more paring discs (16) and at least one pump impeller (6), (6a) and (6b).

5. A contactor according to any one of the preceding claims, wherein one or more weirs (22) and (22a) are mounted inside a space within the first body.

6. A contactor according to any one of the preceding claims, wherein one or more drains (23) or one or more vents (23) for securing the bearings (24) from leakage of fluids are arranged close to one or more seals (25).

7. A contactor according to any one of the preceding claims, wherein one or more transmission gears (27) are connected to the axis of the first body and second body.

8. A contactor according to any one of the preceding claims, wherein the first body has cut in portions (26) for limiting the weight of the first body.

9. A contactor according to any one of the preceding claims, wherein at least one mixing zone (3), (3a) and (3b) is created where counter flow of fluids meet.

10. A method for contacting fluids comprising contacting the fluids within a counter current flow contactor according to any one of the preceding claims, wherein two or more immiscible fluids are pumped into the contactor for mixing by centrifugal force and then the mixed fluids are separated by centrifugal force into at least two fractions of fluids, wherein the fluids are guided to one or more mixing zone (3), (3a), and (3b) in a space between first body and second body, in the mixing zones the fluids are mixed and contacted for transferring of materials or substances, a light phase fraction is separated from the heavy phase fraction by centrifugal force and the light phase fraction is guided out through outlet (12) and the heavy phase fraction is guided out through outlet (14) or through paring tube (17) and out via outlet (14).

11. A method according to claim 10, wherein the rotating bodies are rotating with equal or different speed caused by two or more transmission gears.

12. A method according to claim 10 or 11, wherein the contacting of the fluids within the counter flow contactor is extraction.

13. A method according to claim 10, 11, or 12, wherein the light phase fluids and the heavy phase fluids create that one or more communicating disc shaped volumes of fluids are created between the first and second bodies in mixing zones (3), (3a) and (3b), and the fluids are mixed and contact for transferring of materials or substances, a light phase fraction is separated from the heavy phase fraction by centrifugal force and transferred to the centre, and the heavy phase fraction is separated and transferred to the rim of the space.

14. A method according to any one of claims 10 to 13, wherein one or more weirs (22) and (22a) are guiding the fluids to the mixing zones.
